# EUROPÄISCHE PATENTSCHRIFT

(11) **EP 4 297 880 B1**
(45) Veröffentlichungstag und Bekanntmachung des Hinweises auf die Patenterteilung: **28.08.2024**
(21) Anmeldenummer: 22714595.0
(22) Anmeldetag: 29.03.2022
(51) Int. Cl.: A63F 13/75, A63F 13/55, A63F 13/53

(54) **VORRICHTUNG UND VERFAHREN ZUR ZUORDNUNG EINES ANONYMISIERTEN AVATARS**
DEVICE AND METHOD FOR ASSIGNING AN ANONYMIZED AVATAR
DISPOSITIF ET PROCÉDÉ D'ATTRIBUTION D'UN AVATAR ANONYMISÉ

(30) Priorität: 29.03.2021 DE 102021107929
(43) Veröffentlichungstag der Anmeldung: 03.01.2024
(73) Patentinhaber: Sester, Thomas, 77704 Oberkirch - Nußbach (DE)
(72) Erfinder: Sester, Thomas, 77704 Oberkirch - Nußbach (DE)
(74) Vertreter: Tahhan, Nader Isam Mark
(86) Internationale Anmeldenummer: PCT/IB2022/052875
(87) Internationale Veröffentlichungsnummer: WO 2022/208337

(56) Entgegenhaltungen:
- US-A1- 2009 069 088
- US-A1- 2009 118 016
- US-A1- 2012 172 133
- LAM S K ET AL: "Expressing My Inner Gnome: Appearance and Behavior in Virtual Worlds", IEEE COMPUTER SOCIETY, IEEE, USA, vol. 44, no. 7, 1 July 2011 (2011-07-01), pages 103 - 105, XP011370984, ISSN: 0018-9162, DOI: 10.1109/MC.2011.211
- YAHYAVI AMIR ET AL: "Watchmen: Scalable Cheat-Resistant Support for Distributed Multi-player Online Games", PROCEEDINGS OF THE INTERNATIONAL CONFERENCE ON DISTRIBUTED COMPUTING SYSTEMS, IEEE COMPUTER SOCIETY, US, 8 July 2013 (2013-07-08), pages 134 - 144, XP032529347, ISSN: 1063-6927, [retrieved on 20131210], DOI: 10.1109/ICDCS.2013.62

## Beschreibung

Die Erfindung betrifft eine Vorrichtung und Verfahren zur Zuordnung eines anonymisierten Avatars zu einem Spieler für eine Spielebetreiberplattform für ein Online-Spiel, wobei das Online-Spiel zum Spiel für mehrere Spieler ausgelegt ist.

Die Spielebetreiberplattform kann ein Computerprogrammprodukt oder Softwareprodukt oder nichtflüchtiger Programm-Daten-Speicher mit Programmdaten, die bei Ausführung ausgelegt (sind) für ein Online-Spiel, sein. Dabei kann das Online-Spiel zum Spiel für mehrere Spieler ausgelegt sein, insbesondere zur Verhinderung von Absprachen in betrügerischer Absicht zwischen einem Teil der Spieler zum Schaden eines anderen Teils der Spieler. Solche Spielebetreiberplattform sind in der Regel so ausgelegt, dass sich jeder Spieler über eine ihm zugeordnete Datenverarbeitungsvorrichtung mit Anzeigevorrichtung mit der Spielebetreiberplattform datentechnisch, insbesondere über das Internet, verbinden kann, und auf seiner Anzeigevorrichtung die jeweils anderen Spieler mit ihren jeweiligen Anzeige-Avatar sehen kann. Die Spielebetreiberplattform kann dazu auf einem örtlich entfernten Server betriebsbereit installiert sein, also z.B. in einer Cloud im Internet. Dabei kann die Spielebetreiberplattform ausgelegt sein, dass jeder Spieler über einen eigenes Spieleset verfügen kann, also zum Beispiel einen eignen Satz an Spielkarten, Spielsteinen, Würfeln oder anderen Spielesets. Diese Spielsets können den Spielern von der Spielebetreiberplattform zugeordnet werden, so dass die Spieler keinen Einfluss auf ihre eigenen Spielsets oder ein Spieleset eines anderen Spielers haben. Die Spielebetreiberplattform kann so ausgelegt sein, dass jeder Spieler auf seiner Anzeigevorrichtung nur sein eigenes Spieleset, also z.B. seine eigenen Spielkarten angezeigt bekommt, und nicht die der anderen Spieler. Einzelne Bestandteile des Spielsets, also z.B. einzelne Spielkarten, können nach und nach oder im Bündel oder alle auf einmal ausgewählt und ausgespeilt werden, also für die jeweiligen anderen Spieler sichtbar z.B. auf einen Spieltisch, der ebenfalls in der Anzeigevorrichtung angezeigt werden kann, ausgespielt werden. Auf diese Weise lassen sich bekannte Spiele, wie z.B. Skat, Rommee, Poker, etc., die man mit mehreren Spielern real sich gegenüber sitzend spielen kann, auch virtuell über solch eine Spielebetreiberplattform spielen.

Unter einem ,Avatar' soll hier eine künstliche Person verstanden werden, die dem Online-Spieler auf der Anzeigevorrichtung zugeordnet wird. Dabei kann der Avatar ein Kunstname, eine Grafikfigur, oder etwas Ähnliches oder eine Kombination aus diesen Darstellungen sein. Dabei wird die tatsächliche spielende Person, also jeder Spieler, dem Avatar vom Online-Spielebetreiber eindeutig zugeordnet, in der Regel durch den Anmeldevorgang. Für die Spieler ist der Avatar der jeweils anderen Spieler aber anonym, das heißt, sie wissen in der Regel nicht, welche tatsächliche Person sich hinter dem Avatar verbirgt. Damit soll verhindert werden, dass sich Spieler über einen anderen Kanal, z.B. Telefon in betrügerischer Absicht absprechen und zusammen zum Schaden der oder des restlichen Spieler(s) handeln.

In dieser Schrift wird der Begriff: ,Avatar' als Überbegriff für ,Anmelde-Avatar' und 'Anzeige-Avatar' verwendet. Mit dem Begriff ,Anmelde-Avatar' soll in dieser Schrift ein Avatar gemeint sein, unter dem sich der Spieler anmeldet. Häufig wird das auch als sein Deckname, Spitzname oder Kosename bezeichnet. Mit dem Begriff ,Anzeige-Avatar' soll in dieser Schrift der Avatar gemeint sein, der den anderen Spielern angezeigt wird.

In Spielportalen nach dem Stand der Technik sind die Anmelde-Avatare oftmals gleich den Anzeige-Avataren, also der Einfachheit halber: ,Avatar'. So lange kein Spieler den Avatar eines anderen Spielers kennt, bietet diese Variante einen ausreichenden Schutz vor Absprachen in betrügerischer Absicht. Sobald sich aber zwei Spieler kennen, oder ihre Avatare erraten und dann neben dem Spielportal für den Dritten unbemerkt einen weiteren Kommunikationskanal öffnen, also sich z.B. telefonisch verbinden, ab dem Moment können diese beiden Spieler das Spiel manipulieren. Sie können sich dann über den Inhalt ihrer Spielesets, also z.B. Spielkarten, austauschen und sich so einen Vorteil verschaffen. Ein solches Handeln ist in der Regel natürlich unerlaubt, aber eben auch nur sehr schwer nachverfolgbar oder nachweisbar. Das ist sowohl für die betrogenen Spieler nachteilig als auch für die Betreiber solcher Spielebetreiberplattformen, da sie Spieler verlieren, die das Gefühl haben, auf der Plattform von anderen Spielern unerlaubt aber nicht nachweisbar benachteiligt zu werden.

Der Stand der Technik zeigt Verfahren zur Zuordnung von Avataren zu Spielern in: LAM S K ET AL: "Expressing My Inner Gnome: Appearance and Behavior in Virtual Worlds",IEEE COMPUTER SOCIETY, IEEE, USA, Bd. 44, Nr. 7, 1. Juli 2011 (2011-07-01), Seiten 103-105, XP011370984,ISSN: 0018-9162, DOI: 10.1109/MC.2011.211. Weiterhin zeigt der Stand der Technik Verfahren zur Vermeidung von Betrug in online Glücksspielen in: US 2009/069088 A1, YAHYAVI AMIR ET AL: "Watchmen: Scalable Cheat-Resistant Support for Distributed Multi-player Online Games",PROCEEDINGS OF THE INTERNATIONAL CONFERENCE ON DISTRIBUTED COMPUTING SYSTEMS, IEEE COMPUTER SOCIETY, US, 8. Juli 2013 (2013-07-08), Seiten 134-144, XP032529347,ISSN: 1063-6927, DOI: 10.1109/ ICDCS.2013.62, US 2009/118016 A1 und US 2012/172133 A1.

Aufgabe der Erfindung ist es ein Verfahren bereitzustellen zur Zuordnung eines anonymisierten Avatars, das solche Spiel sicherer macht gegen solche Absprachen in betrügerischer Absicht.

Die Aufgabe wird gelöst mit einem Verfahren mit den Merkmalen des Anspruchs 1 oder den Merkmalen des Computerprogrammprodukts des Anspruchs 11. Vorteilhafte Ausgestaltungen finden sich in den abhängigen Ansprüchen und der folgenden Beschreibung zu der Erfindung.

Bei dem Verfahren zur Zuordnung von zumindest einem anonymisierten Avatar zu einem Spieler für eine Spielebetreiberplattform für ein Online-Spiel, wobei das Online-Spiel zum Spiel für mehrere Spieler ausgelegt ist,
wobei Spielebetreiberplattform ausgelegt ist, dass sich jeder Spieler
a) über eine ihm zugeordnete Datenverarbeitungsvorrichtung mit Anzeigevorrichtung mit der Spielebetreiberplattform datentechnisch, insbesondere über das Internet, verbinden kann, und
b) auf seiner Anzeigevorrichtung die jeweils anderen Spieler mit ihrem jeweiligen Anzeige-Avatar sehen kann,
c) sind die folgenden Verfahrensschritten durch die Spielebetreiberplattform ausführbar:
   - Ermitteln der Anmelde-Avatar-Daten von den Spielern,
   - Für jeden der Spieler: Zuordnung von Anzeige-Avatar-Daten zu den Anmelde-Avatar-Daten,
   - Übermittlung der jeweiligen Anzeige-Avatar-Daten an die Datenverarbeitungsvorrichtungen der Spieler zur Anzeige auf ihren jeweiligen Anzeigevorrichtungen,
d) wobei die Zuordnung der Anzeige-Avatar-Daten durch eine vorgegebene Datenaustausch-Routine dergestalt erfolgt, dass sich die Zuordnung der Anzeige-Avatar-Daten für einen ersten Spieler von der Zuordnung der Anzeige-Avatar-Daten für einen weiteren Spieler unterscheidet.

So wird das Erraten, wer hinter dem Anzeige-Avataren tatsächlich steckt, für die Spieler nahezu unmöglich.

Eine einfachere Verhinderung dieser Erratbarkeit wäre die Möglichkeit, die Anzeige-Avatare umzubenennen, also nicht die Anmelde-Avatare anzuzeigen, sondern veränderte Anzeige-Avatare. Aber solche Anonymisierungsversuche haben sich als zu leicht erratbar herausgestellt. Wenn sich z.B. zwei Spieler zusammentun und sich zu einem gemeinsamen Spiel am Telefon verabreden und dann sich gegenseitig ihre Anzeige-Avatare verraten, dann ist eine solche Anonymisierung schon umgangen. Das besondere an der hier beschriebenen Variante ist, dass sich die Anzeige-Avatar-Daten für einen ersten Spieler von den Anzeige-Avatar-Daten, eines weiteren Spielers unterscheiden. So bekommt z.B. ein erster Spieler 1 mit ersten Anmelde-Avatar-Daten A auf seiner Anzeigevorrichtung sich selbst als ein erster Anzeige-Avatar U angezeigt und gleichzeitig bekommt ein zweiter Spieler 2 mit zweiten Anmelde-Avatar-Daten B auf dessen Anzeigevorrichtung eine andere Zuordnung für den ersten Spieler 1 angezeigt, beispielsweise einen zweiten Anzeige-Avatar V oder einen dritten Anzeige-Avatar W.

Insbesondere können sich die Anzeige-Avatar-Daten für mehrere Spieler unterschieden. Das kann die Erratbarkeit noch schwieriger machen.

Besonders bevorzugt kann die Spielebetreiberplattform ausgelegt sein, dass sich die Zuordnung der Anzeige-Avatar-Daten für alle Spieler unterschieden. Das macht eine solche Spielebetreiberplattform noch sicherer.

In einer vorteilhaften Ausgestaltung kann die Datenaustausch-Routine die Zuordnung der Anzeige-Avatar-Daten für die Spieler, insbesondere für jedes Spiel, mit Hilfe einer Zufallsgenerator-Routine vergeben. Das macht eine solche Spielebetreiberplattform noch sicherer.

In einer vorteilhaften Ausgestaltung kann Spielebetreiberplattform ausgelegt sein für mehr als zwei Spieler, insbesondere für drei Spieler.

In einer vorteilhaften Ausgestaltung kann ein Spiel aus mehreren Spielrunden bestehen und insbesondere die Zuordnung von Anzeige-Avatar-Daten zwischen zwei Spielerunden wechseln. Das macht eine solche Spielebetreiberplattform noch sicherer.

In einer vorteilhaften Ausgestaltung können genauso viele Anzeige-Avatar-Daten wie Anmelde-Avatar-Daten vorgesehen sein. Das macht das Spiel übersichtlich und bietet einen guten Schutz vor der ungewollten Erratbarkeit der Zuordnung der Anzeige-Avatar-Daten zu den Spielern.

In einer vorteilhaften Ausgestaltung können mehr Anzeige-Avatar-Daten wie Anmelde-Avatar-Daten vorgesehen sein, insbesondere bis zu einer Anzahl von Anzahl Anmelde-Avatar-Daten mal Anzahl Spieler. Das macht eine solche Spielebetreiberplattform besonders sicher.

In einer vorteilhaften Ausgestaltung können nach einem vorgegeben Ereignis, insbesondere nach dem Ende eines Spiels, die Anmelde-Avatar-Daten an die Datenverarbeitungsvorrichtungen der Spieler zur Anzeige auf ihren jeweiligen Anzeigevorrichtungen übermittelt werden. Das ermöglicht den Spielern eine Identifikation mit den Anmelde-Avataren, was die Freude am Spiel erhöhen kann, da man sich mit bekannten Anmelde-Avataren messen und vergleichen kann.

Offenbart ist auch ein Verfahren zur Anzeige einer Zuordnung von zumindest einem anonymisierten Avatar nach einem der zuvor beschriebenen Verfahren.

Die Erfindung wird auch gelöst durch eine Vorrichtung, nämlich z.B. ein Computerprogrammprodukt oder Softwareprodukt oder einen nichtflüchtigen Programm-Daten-Speicher mit Programmdaten, die bei Ausführung ausgelegt (sind) für eine Spielebetreiberplattform für ein Online-Spiel, wobei das Online-Spiel zum Spiel für mehrere Spieler ausgelegt ist, wobei die Spielebetreiberplattform ausgelegt ist, dass sich jeder Spieler
a) über eine ihm zugeordnete Datenverarbeitungsvorrichtung mit Anzeigevorrichtung mit der Spielebetreiberplattform datentechnisch, insbesondere über das Internet, verbinden kann, und
b) auf seiner Anzeigevorrichtung die jeweils anderen Spieler mit ihrem jeweiligen Anzeige-Avatar sehen kann,
c) mit den folgenden Verfahrensschritten, ausführbar durch die Spielebetreiberplattform:
   - Ermitteln der Anmelde-Avatar-Daten von den Spielern,
   - Für jeden der Spieler: Zuordnung von Anzeige-Avatar-Daten zu den Anmelde-Avatar-Daten,
   - Übermittlung der jeweiligen Anzeige-Avatar-Daten an die Datenverarbeitungsvorrichtungen der Spieler zur Anzeige auf ihren jeweiligen Anzeigevorrichtungen,
d) wobei die Zuordnung der Anzeige-Avatar-Daten durch eine vorgegebene Datenaustausch-Routine dergestalt erfolgt, dass sich die Zuordnung der Anzeige-Avatar-Daten für einen ersten Spieler von der Zuordnung der Anzeige-Avatar-Daten für einen weiteren Spieler unterscheidet.

Dabei können die zuvor genannten Ausgestaltungen des erfindungsgemäßen Verfahrens auch eine oder mehrere der die erfindungsgemäßen Vorrichtungen weiterbilden.

Die Spielebetreiberplattform ist als eine computerbetriebene digitale Spielebetreiberplattform zu verstehen. Diese ist ausgelegt auf einem elektronischen Rechensystem betrieben zu werden.

Die Datenverarbeitungsvorrichtungen mit ihren Anzeigevorrichtungen sind als computerbetriebene digitale Anwendergeräte zu verstehen. Diese stellen jeweils ein elektronisches Rechensystem dar.

Eine Zuordnung von Daten erster Art zu Daten zweiter Art, also z.B. von Anzeige-Avatar-Daten zu den Anmelde-Avatar-Daten, erfolgt durch Algorithmen und Zuordnungstabellen auf den Rechensystemen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert. Es zeigt:
- Fig. 1: schematisch drei Spieler vor ihren Datenverarbeitungsvorrichtungen bei einem Online-Spiel gemäß dem Stand der Technik;
- Fig.2: schematisch drei Spieler vor ihren Datenverarbeitungsvorrichtungen bei einem Online-Spiel gemäß einer ersten erfindungsgemäßen Ausgestaltung;
- Fig.3: schematisch drei Spieler vor ihren Datenverarbeitungsvorrichtungen bei einem Online-Spiel gemäß einer zweiten erfindungsgemäßen Ausgestaltung;
- Fig. 4: drei Verfahrensschritte des erfindungsgemäßen Verfahrens;
- Fig. 5: eine Ausführungsform eines Rechensystems.

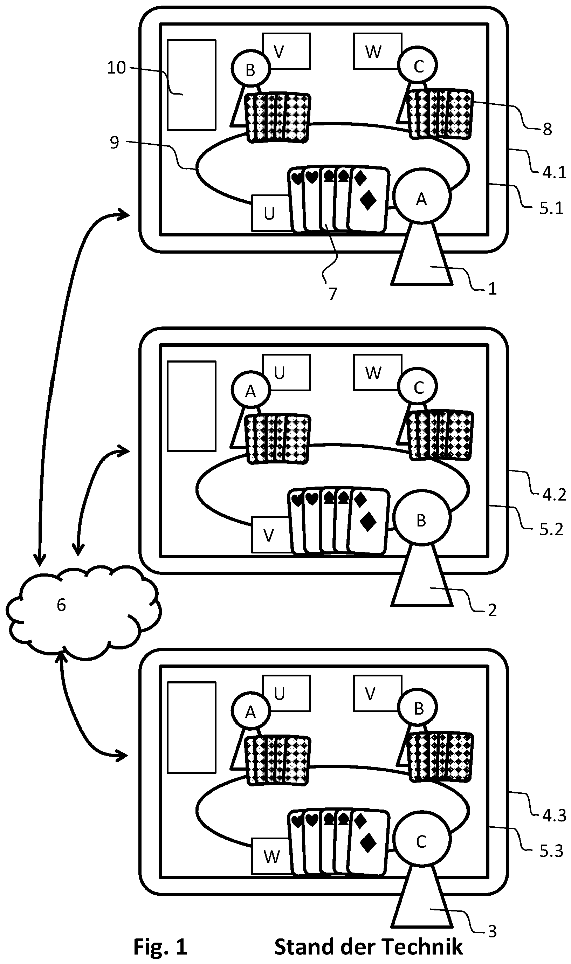

In Fig. 1, 2 und 3 sind jeweils in einer schematischen Skizze drei Spieler 1,2,3 vor ihren Datenverarbeitungsvorrichtungen 4.1, 4.2, 4.3 gezeigt. Die Datenverarbeitungsvorrichtungen 4.1, 4.2, 4.3 können z.B. Desktop-Rechner, Laptops oder Smartphones sein. Die Datenverarbeitungsvorrichtungen 4.1, 4.2, 4.3 weisen jeweils eine Anzeigevorrichtung 5.1, 5.2, 5.3 auf. Dies kann z.B. ein Bildschirm sein. Der Bildschirm kann in die Datenverarbeitungsvorrichtungen 4.1, 4.2, 4.3 integriert sein, wie z.B. heute bei Laptops oder Smartphones üblich oder eine separate Einheit darstellen, wenn die Datenverarbeitungsvorrichtungen beispielsweise ein Desktop-Rechner darstellt. Auf der Anzeigevorrichtung 5.1, 5.2, 5.3 werden jedem der Spieler 1,2,3 die folgenden Dinge dargestellt:
- vorderseitig, also für den jeweiligen Spieler sichtbar sein eigenes Spieleset 7, im vorliegenden Fall die eigenen Spielekarten;
- rückseitig, also für den jeweiligen Spieler nicht einsehbar die Spielsets 8 der anderen Spieler, im vorliegenden Fall die Spielekarten der anderen Spieler von hinten, also uneinsehbar,
- ein virtueller Spieltisch 9,
- Eine Tafel 10, in der z.B. der Spielstand oder die letzten Spielzüge dokumentiert werden können,
- Die Anzeige-Avatare U, V, W

In den Figuren 1, 2, 3 sind auch die Anmelde-Avatare A, B, C gezeigt. Diese sind nur zum Verständnis der Zuordnung für diese Beschreibung gezeigt. Die Spieler 1,2,3 können diese Anmelde-Avatare A, B, C in ihrer Anzeigevorrichtung 5.1, 5.2, 5.3 nicht sehen.

Die Datenverarbeitungsvorrichtungen 4.1, 4.2, 4.3 sind mit der Spielebetreiberplattform 6 datentechnisch, insbesondere über das Internet, verbunden, was durch Pfeile angedeutet ist. Die Spielebetreiberplattform 6 kann dazu auf einem örtlich entfernten Server betriebsbereit installiert sein, also z.B. in einer Cloud im Internet.

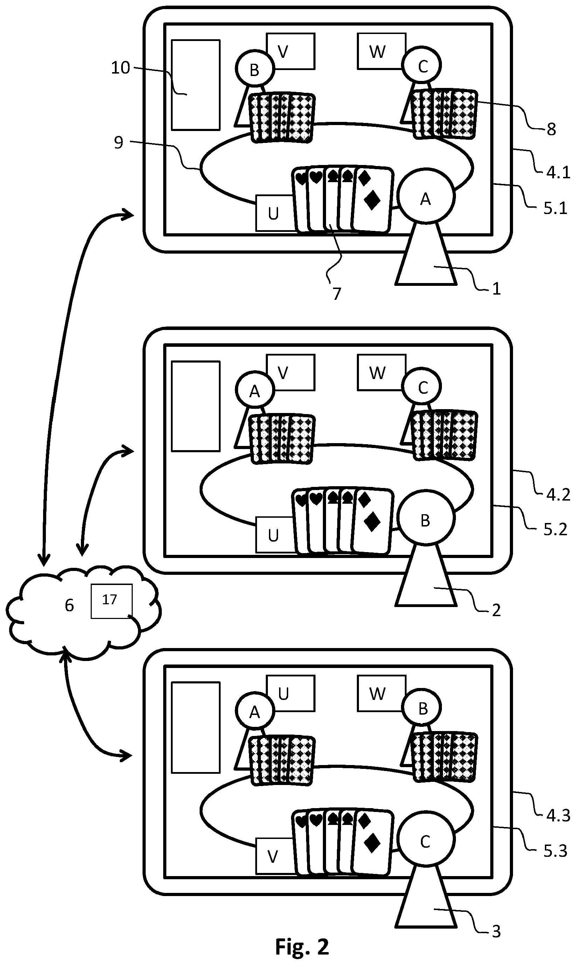

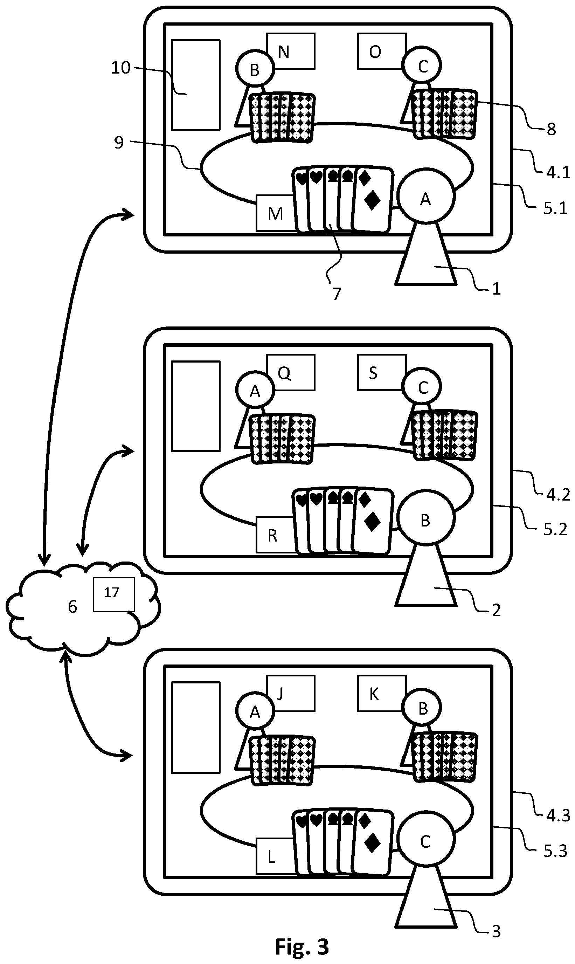

In den Figuren 2 und 3 ist jeweils zusätzlich in der Spielebetreiberplattform 6 die Datenaustausch-Routine 17 angedeutet. Wie zuvor erwähnt, werden für jeden der Spieler 1, 2,3 den Anmelde-Avatar-Daten A, B, C Anzeige-Avatar-Daten U,V,W, M,N,O, Q,R,S, J,K,L zugeordnet.

Diese Zuordnung macht die Datenaustausch-Routine 17 beispielsweise in Fig. 2 dergestalt, dass die Anzeige-Avatar-Daten U, V, W für einen ersten Spieler 1 sich von den Anzeige-Avatar-Daten eines weiteren Spielers 2 unterscheiden. Das erfolgt in Fig. 2 gemäß folgender Zuordnung:

| | | | |
|---|---|---|---|
| Anmelde Avatar, unsichtbar | A | B | C |
| Anzeige-Avatar für Spieler 1 sichtbar | U | V | W |

| | | | |
|---|---|---|---|
| Anmelde Avatar, unsichtbar | A | B | C |
| Anzeige-Avatar für Spieler 2 sichtbar | V | U | W |

| | | | |
|---|---|---|---|
| Anmelde Avatar, unsichtbar | A | B | C |
| Anzeige-Avatar für Spieler 3 sichtbar | U | W | V |

Im Beispiel, das in Fig. 2 gezeigt ist, sind demnach genauso viele Anzeige-Avatar-Daten U, V, W vorgesehen, wie Anmelde-Avatar-Daten A, B, C.

Im Beispiel, das in Fig. 3 gezeigt ist, sind mehr Anzeige-Avatar-Daten J,K,L,M,N,O, Q, R,S als Anmelde-Avatar-Daten A,B,C vorgesehen, insbesondere sind die maximal mögliche Anzahl von Anzeige-Avatar-Daten vorgesehen, nämlich Anzahl Anmelde-Avatar-Daten A,B,C mal Anzahl Spieler 1,2,3, also drei mal drei, also neun Anzeige-Avatar-Daten J,K,L,M,N,O, Q, R,S.

Das erfolgt in Fig. 3 gemäß folgender Zuordnung:

| | | | |
|---|---|---|---|
| Anmelde Avatar, unsichtbar | A | B | C |
| Anzeige-Avatar für Spieler 1 sichtbar | M | N | O |

| | | | |
|---|---|---|---|
| Anmelde Avatar, unsichtbar | A | B | C |
| Anzeige-Avatar für Spieler 2 sichtbar | Q | R | S |

| | | | |
|---|---|---|---|
| Anmelde Avatar, unsichtbar | A | B | C |
| Anzeige-Avatar für Spieler 3 sichtbar | J | K | L |

Demgegenüber ist in Fig. 1 gemäß dem Stand der Technik der Anzeige Avatar U, V, W für jeden Spieler 1,2,3 der gleiche. Solche einfachen Anonymisierungsversuche haben sich als zu leicht erratbar herausgestellt. Wenn sich z.B. zwei Spieler zusammentun und sich zu einem gemeinsamen Spiel am Telefon verabreden und dann sich gegenseitig ihre Anzeige-Avatare verraten, dann ist eine solche Anonymisierung schon umgangen.

Wenn aber, wie in Fig. 2 gezeigt, der Spieler 1 mit den Anmelde-Avatar A selbst z.B. den Anzeige-Avatar U für sich angezeigt bekommt, der Spieler 2 aber den Spieler 1 mit dem Anmelde-Avatar A auf seiner Anzeigevorrichtung mit dem Anzeige-Avatar V angezeigt bekommt, so ist es nahezu unmöglich herauszubekommen, wie die Zuordnung von Spieler zu Anzeige-Avatar durch die Spielebetreiberplattform 6 erfolgt.

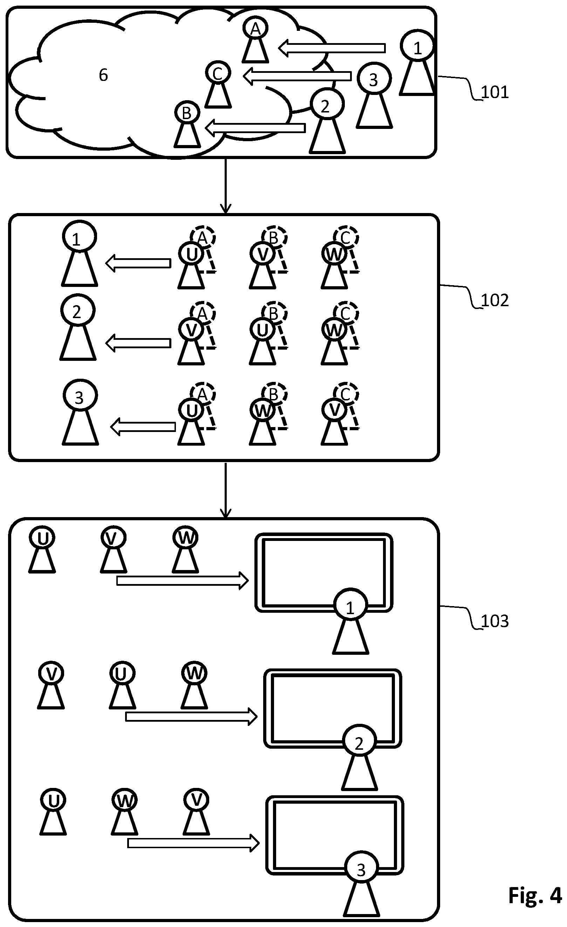

In Fig. 4 sind die drei Verfahrensschritte 101, 102, 103 des Verfahrens und der Vorrichtungen dargestellt.
Im Schritt 101: Ermitteln der Anmelde-Avatar-Daten A,B,C von den Spielern 1,2,3,
Im Schritt 102: Für jeden der Spieler 1,2,3: Zuordnung von Anzeige-Avatar-Daten U,V,W zu den Anmelde-Avatar-Daten A,B,C,
Im Schritt 103: Übermittlung der jeweiligen Anzeige-Avatar-Daten U,V,W an die Datenverarbeitungsvorrichtungen 4.1, 4.2, 4.3 der Spieler 1,2,3 zur Anzeige auf ihren jeweiligen Anzeigevorrichtungen 5.1, 5.2, 5.3.

In der erfindungsgemäßen Ausgestaltung könnte man den ,Anzeige-Avatar' ist der auch als ,Verschleierungs-, oder ,Anonymisierungs-Avatar' bezeichnen.

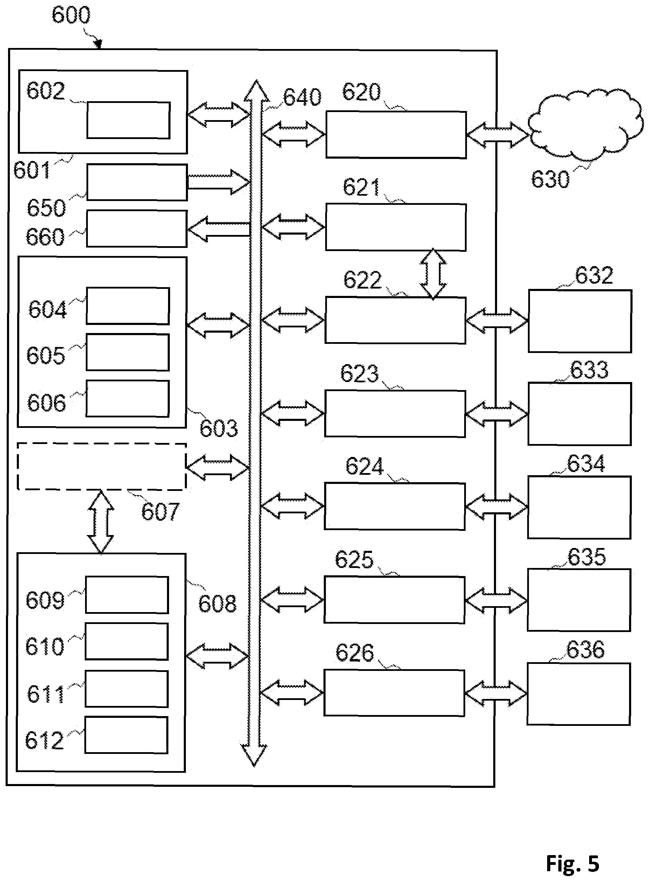

Fig. 5 zeigt eine schematische Darstellung einer Ausführungsform eines Rechensystems 600, das geeignet ist Anweisungen zum Ausführen eines oder mehrerer Aspekte der Verfahren in einer der Vorrichtung der vorliegenden Erfindung auszuführen. Zum Beispiel kann das Rechensystem 600 verwendet werden, um die Spieleplattform 6 oder eine Datenverarbeitungsvorrichtungen 4.1, 4.2, 4.3 mit ihren Anzeigevorrichtungen 5.1, 5.2, 5.3 zu betreiben bzw. zu realisieren. Die Komponenten in Fig. 5 sind als Beispiele zu verstehen und beschränken nicht den Umfang der Verwendung oder Funktionalität von Hardware, Software, Firmware, eingebetteten Logikkomponenten, oder einer Kombination von mehreren solcher Komponenten zur Implementierung spezieller Ausführungsformen der vorliegenden Erfindung. Einige oder alle der dargestellten Komponenten können ein Teil des Rechensystems 600 sein.

Das Rechensystem 600 enthält in dieser Ausführungsform beispielhaft zumindest einen Prozessor 601, wie beispielsweise eine zentrale Verarbeitungseinheit (Central Processing Unit, CPU) oder einen Digital Signal Processor (DSP) oder einen programmierbaren Logikbaustein (PLD) oder eine Field Programable Gate Array (FPGA). Das Rechensystem 600 kann auch einen Arbeitsspeicher 603 und einen Datenspeicher 608 umfassen, die beide miteinander und mit anderen Komponenten über einen Bus 640 kommunizieren können. Der Bus 640 kann auch eine Anzeige 632, eine oder mehrere Eingabevorrichtungen 633, eine oder mehrere Ausgabevorrichtungen 634, eine oder mehrere Speichervorrichtungen 635 und verschiedene Speichermedien 636 miteinander und mit einem oder mehreren Vorrichtungen von dem Prozessor 601, dem Arbeitsspeicher 603 und dem Datenspeicher 608 verbinden. Alle diese Elemente können direkt oder über eine oder mehrere Schnittstellen 622, 623, 624, 625, 626 oder Adapter mit dem Bus 640 gekoppelt sein.

Das Rechensystem 600 kann eine geeignete physikalische Form haben, einschließlich, aber nicht begrenzt auf einen oder mehrere integrierte Schaltkreise (ICs), Leiterplatten (PCBs), mobile Handgeräte, Laptop- oder Notebook-Computer, verteilte Computersysteme, Rechengatter oder Server. Der Prozessor 601 oder eine CPU enthält gegebenenfalls eine Schnellzugriffs-Speichereinheit 602, auch Cache-Speichereinheit genannt zum temporären lokalen Speichern von Befehlen, Daten oder Prozessoradressen. Der Prozessor 601 ist konfiguriert, um die Ausführung der Anweisungen, welche auf mindestens einem Speichermedium gespeichert sind, zu unterstützen.

Der Speicher 603 kann verschiedene Komponenten aufweisen einschließlich, aber ist nicht zu begrenzen auf eine Direktzugriffsspeicherkomponente z.B. RAM 604 insbesondere ein statischer RAM (SRAM), ein dynamischer RAM (DRAM), usw., ein Nur-Lese-Speicher, z.B. ROM 605, und beliebige Kombinationen davon. Der ROM 605 kann auch fungieren, um Daten und Anweisungen unidirektional an den oder die Prozessor(en) 601 zu kommunizieren, und der RAM 604 kann auch fungieren, um Daten und Anweisungen bidirektional an den oder die Prozessor(en) 601 zu kommunizieren.

Der Festspeicher 608 ist bidirektional mit dem oder den Prozessoren 601, wahlweise durch eine Speichersteuereinheit 607 oder direkt, verbunden. Der Festspeicher 608 bietet zusätzliche Speicherkapazität. Der Speicher 608 kann verwendet werden, um das Betriebssystem 609, Programme 610, Daten 611, Anwendungen 612, Anwendungsprogramme, und dergleichen zu speichern. Häufig, jedoch nicht immer, ist der Speicher 608 ein sekundäres Speichermedium, wie eine Festplatte oder Solid-State-Disk, das langsamer als der Primärspeicher, z. B. Speicher 603, ist. Der Speicher 608 kann z.B. auch ein magnetische, eine optische oder ein transistorisierte, eine Festkörper-Speichervorrichtung z.B. Flash-basierte Systeme) oder eine Kombination von beliebigen der oben genannten Elementen umfassen. Der Informationsspeicher 608 kann in geeigneten Fällen als virtueller Speicher in den Speicher 603 integriert werden.

Der Bus 640 verbindet eine Vielzahl von Subsystemen. Bus 640 kann ein beliebiger von mehreren Typen von Busstrukturen sein, z.B. ein Speicherbus, einen Speichercontroller, ein peripherer Bus, einen lokaler Bus, und alle Kombinationen davon, unter Verwendung einer Vielzahl von Busarchitekturen. Der Bus kann drahtgebunden oder drahtlos oder als eine Kombination aus beiden Systemen ausgeführt sein.

Informationen und Daten können auch über eine Anzeige 632 angezeigt werden. Beispiele für eine Anzeige 632 umfassen, sind aber nicht beschränkt auf, eine Flüssigkristallanzeige (LCD), eine organische Flüssigkristall-Display (OLED), einer Kathodenstrahlröhre (CRT), eine Plasmaanzeige, Projektoreinheit, und beliebigen Kombinationen davon. Die Anzeige 632 kann mit Prozessor(en) 601, Speichern 603, 608, Eingabegeräten 633, und weiteren Komponenten über den Bus 640 verbunden sein.

Der Bus 640 kann alle zuvor genannten Komponenten mit einer Netzwerkschnittstelle 620 mit einem externen Netzwerk 630 verbinden. Das kann z.B. ein LAN, WLAN, etc sein. Es kann Verbindung zu weiteren Speichermedien, Servern, Druckern, Anzeigegeräten aufbauen. Es kann einen Zugang zum Telekommunikationsvorrichtungen und Internet aufweisen. Der Bus 640 kann alle zuvor genannten Komponenten mit einer Grafiksteuerung 621 und einer Grafikschnittstelle 622 verbinden, die mit zumindest einer Eingabevorrichtungen 633 verbindbar ist.

Der Bus 640 kann alle zuvor genannten Komponenten mit einer Eingabeschnittstelle 623 verbinden, die mit zumindest einer Eingabevorrichtung 633 verbindbar ist Eine Eingabevorrichtung kann z.B. ein Tastenfeld, eine Tastatur, eine Maus, ein Stift, ein Touchscreen usw. einschließen.

Der Bus 640 kann alle zuvor genannten Komponenten mit einer Ausgabeschnittstelle 624 verbinden, die mit zumindest einer Ausgabevorrichtung 634 verbindbar ist. Eine Ausgabevorrichtungen 634 kann eine Leuchtanzeige, eine LED Anzeige ein Display, z.B. LCD, OLED usw. oder eine Schnittstelle zu einer solchen Einrichtung aufweisen.

Der Bus 640 kann alle zuvor genannten Komponenten mit einer Speicherzugriffsschnittstelle 625 verbinden, die mit zumindest einer Speichervorrichtung 635 verbindbar ist. Der Bus 640 kann alle zuvor genannten Komponenten mit einer weiteren Speicherzugriffsschnittstelle 626 verbinden, die mit zumindest einer Speichermedium 636 verbindbar ist. Eine Speichervorrichtung 635 oder ein Speichermedium 636 kann z.B. ein Festkörper-, ein Magnetspeicher oder einen optischer Speicher sein, insbesondere ein nichtflüchtiger Speicher aufweisen. Das Speichermedium kann in Betrieb des Rechensystems vom Rechensystem getrennt werden, ohne dass Daten verloren gehen.

Anzeige 632, Eingabevorrichtung 633, Ausgabevorrichtung 634, Speichervorrichtung 635, Speichermedium 636 können jeweils außerhalb des Rechensystems 600 angeordnet sein oder in ihm integriert sein. Sie können auch über eine Verbindung zum Internet oder anderen Netzwerkschnittstellen mit dem Rechensystem 600 verbunden sein.

## Patentansprüche

1. Verfahren zur Zuordnung von zumindest einem anonymisierten Avatar zu einem Spieler (1, 2, 3) für eine Spielebetreiberplattform (6) für ein Online-Spiel, wobei das Online-Spiel zum Spiel für mehrere Spieler (1, 2, 3) ausgelegt ist,
wobei Spielebetreiberplattform (6) ausgelegt ist, dass sich jeder Spieler (1, 2, 3)
a) über eine ihm zugeordnete Datenverarbeitungsvorrichtung (4.1, 4.2, 4.3) mit Anzeigevorrichtung (5.1, 5.2, 5.3) mit der Spielebetreiberplattform (6) datentechnisch, insbesondere über das Internet, verbinden kann, und
b) auf seiner Anzeigevorrichtung (5.1, 5.2, 5.3) die jeweils anderen Spieler mit ihrem jeweiligen Anzeige-Avatar (U,V,W, M,N,O, Q,R,S, J,K,L) sehen kann,
c) mit den folgenden Verfahrensschritten, ausführbar durch die Spielebetreiberplattform (6):
- (101) Ermitteln der Anmelde-Avatar-Daten (A,B,C) von den Spielern (1,2,3),
- (102) Für jeden der Spieler (1,2,3): Zuordnung von Anzeige-Avatar-Daten (U,V,W, M,N,O, Q,R,S, J,K,L) zu den Anmelde-Avatar-Daten (A,B,C),
- (103) Übermittlung der jeweiligen Anzeige-Avatar-Daten (U, V, W, M, N, O, Q, R, S, J, K, L) an die Datenverarbeitungsvorrichtungen (4.1, 4.2, 4.3) der Spieler (1,2,3) zur Anzeige auf ihren jeweiligen Anzeigevorrichtungen (5.1, 5.2, 5.3),
**gekennzeichnet durch**
d) wobei die Zuordnung der Anzeige-Avatar-Daten der jeweils anderen Spieler (U,V,W, M, N, O, Q,R,S, J,K,L) durch eine vorgegebene Datenaustausch-Routine (17) dergestalt erfolgt, dass sich die Zuordnung der Anzeige-Avatar-Daten der jeweils anderen Spieler (U, V, W, M,N,O, Q,R,S, J,K,L) für einen ersten Spieler (1) von der Zuordnung der Anzeige-Avatar-Daten der jeweils anderen Spieler (U,V,W, M, N, O, Q,R,S, J,K,L) für einen weiteren Spieler (2) unterscheidet.

2. Verfahren nach Anspruch 1, wobei ein erster Spieler (1) mit ersten Anmelde-Avatar-Daten (A) auf seiner Anzeigevorrichtung (5.1) sich selbst als ein erster Anzeige-Avatar (U) angezeigt bekommt und gleichzeitig ein zweiter Spieler (2) mit zweiten Anmelde-Avatar-Daten (B) auf dessen Anzeigevorrichtung (5.2) eine andere Zuordnung für den ersten Spieler (1) angezeigt bekommt, beispielsweise einen zweiten Anzeige-Avatar (V) oder einen dritten Anzeige-Avatar (W).

3. Verfahren nach einem der vorhergehenden Ansprüche, wobei sich die Anzeige-Avatar-Daten (U, V, W, M, N, O, Q,R,S, J,K,L) für mehrere, insbesondere für alle, Spieler (1,2,3) unterschieden.

4. Verfahren nach einem der vorhergehenden Ansprüche, wobei die Datenaustausch-Routine (17) die Zuordnung der Anzeige-Avatar-Daten (U, V, W, M, N, O, Q,R,S, J,K,L) für die Spieler, insbesondere für jedes Spiel, mit Hilfe einer Zufallsgenerator-Routine vergibt.

5. Verfahren nach einem der vorhergehenden Ansprüche, wobei die Spielebetreiberplattform (6) für mehr als zwei Spieler (1, 2, 3), insbesondere für drei Spieler (1, 2, 3) ausgelegt ist.

6. Verfahren nach einem der vorhergehenden Ansprüche, wobei ein Spiel aus mehreren Spielrunden bestehen kann und die Zuordnung von Anzeige-Avatar-Daten (U, V, W, M, N, O, Q,R,S, J,K,L) zwischen zwei Spielerunden wechselt.

7. Verfahren nach einem der vorhergehenden Ansprüche, wobei genauso viele Anzeige-Avatar-Daten (U,V,W) wie Anmelde-Avatar-Daten (A,B,C) vorgesehen sind.

8. Verfahren nach einem der vorhergehenden Ansprüche, wobei mehr Anzeige-Avatar-Daten (J,K,L,M,N,O, Q, R,S) wie Anmelde-Avatar-Daten (A,B,C) vorgesehen sind, insbesondere bis zu einer Anzahl von Anzahl Anmelde-Avatar-Daten (A,B,C) mal Anzahl Spieler (1,2,3).

9. Verfahren nach einem der vorhergehenden Ansprüche, wobei nach einem vorgegeben Ereignis, insbesondere nach dem Ende eines Spiels, die Anmelde-Avatar-Daten (A,B,C) an die Datenverarbeitungsvorrichtungen (4.1, 4.2, 4.3) der Spieler (1,2,3) zur Anzeige auf ihren jeweiligen Anzeigevorrichtungen (5.1, 5.2, 5.3) übermittelt werden.

10. Verfahren zur Anzeige einer Zuordnung von zumindest einem anonymisierten Avatar nach einem Verfahren der vorhergehenden Ansprüche.

11. Computerprogrammprodukt, umfassend Befehle, das bei Ausführung ausgelegt ist für eine Spielebetreiberplattform (6) für ein Online-Spiel, wobei das Online-Spiel zum Spiel für mehrere Spieler (1, 2, 3) ausgelegt ist, wobei die Spielebetreiberplattform (6) ausgelegt ist, dass sich jeder Spieler (1, 2, 3)
a) über eine ihm zugeordnete Datenverarbeitungsvorrichtung (4.1, 4.2, 4.3) mit Anzeigevorrichtung (5.1, 5.2, 5.3) mit der Spielebetreiberplattform (6) datentechnisch, insbesondere über das Internet, verbinden kann, und
b) auf seiner Anzeigevorrichtung (5.1, 5.2, 5.3) die jeweils anderen Spieler mit ihrem jeweiligen Anzeige-Avatar (U,V,W, M,N,O, Q,R,S, J,K,L) sehen kann,
c) mit den folgenden Verfahrensschritten, ausführbar durch die Spielebetreiberplattform (6):
- (101) Ermitteln der Anmelde-Avatar-Daten (A,B,C) von den Spielern (1,2,3),
- (102) Für jeden der Spieler (1,2,3): Zuordnung von Anzeige-Avatar-Daten (U,V,W, M,N,O, Q,R,S, J,K,L) zu den Anmelde-Avatar-Daten (A,B,C),
- (103) Übermittlung der jeweiligen Anzeige-Avatar-Daten (U,V,W, M,N,O, Q,R,S, J,K,L) an die Datenverarbeitungsvorrichtungen (4.1, 4.2, 4.3) der Spieler (1,2,3) zur Anzeige auf ihren jeweiligen Anzeigevorrichtungen (5.1, 5.2, 5.3),
**gekennzeichnet durch**
d) wobei die Zuordnung der Anzeige-Avatar-Daten der jeweils anderen Spieler durch eine vorgegebene Datenaustausch-Routine (17) dergestalt erfolgt, dass sich die Zuordnung der Anzeige-Avatar-Daten der jeweils anderen Spieler (U, V, W, M,N,O, Q,R,S, J,K,L) für einen ersten Spieler (1) von der Zuordnung der Anzeige-Avatar-Daten der jeweils anderen Spieler (U,V,W, M,N,O, Q,R,S, J,K,L) für einen weiteren Spieler (2) unterscheidet.

12. Computerprogrammprodukt nach Anspruch 11, das bei Ausführung ausgelegt ist, einem ersten Spieler (1) mit ersten Anmelde-Avatar-Daten (A) auf seiner Anzeigevorrichtung (5.1) sich selbst als einen ersten Anzeige-Avatar (U) anzuzeigen und gleichzeitig einem zweiten Spieler (2) mit zweiten Anmelde-Avatar-Daten (B) auf dessen Anzeigevorrichtung (5.2) eine andere Zuordnung für den ersten Spieler (1) anzuzeigen, beispielsweise einen zweiten Anzeige-Avatar (V) oder einen dritten Anzeige-Avatar (W).

## Claims

1. Method for assigning at least one anonymised avatar to a player (1, 2, 3) for a game operator platform (6) for an online game, wherein the online game is designed to be played by a plurality of players (1, 2, 3),
wherein game operator platform (6) is designed so that each player (1, 2, 3)
a) can connect to the game operator platform (6) via a data processing device (4.1, 4.2, 4.3) with display device (5.1, 5.2, 5.3) assigned to him, in particular via the Internet, and
b) can see the other players with their respective display avatars (U,V,W, M,N,O, Q,R,S, J,K,L) on his display device (5.1, 5.2, 5.3),
c) having the following process steps, executable by the game operator platform (6):
- (101) Determining the registration avatar data (A,B,C) from the players (1,2,3),
- (102) For each of the players (1,2,3): Assignment of display avatar data (U,V,W, M,N,O, Q,R,S, J,K,L) to the registration avatar data (A,B,C),
- (103) transmitting the respective display avatar data (U, V, W, M, N, O, Q, R, S, J, K, L) to the data processing devices (4.1, 4.2, 4.3) of the players (1, 2, 3) for display on their respective display devices (5.1, 5.2, 5.3), **characterised by**
d) wherein the assignment of the display avatar data of the respective other players (U, V, W, M, N, O, Q, R, S, J, K, L) is performed by a predetermined data exchange routine (17) in such a way that the assignment of the display avatar data of the respective other players (U, V, W, M, N, O, Q, R, S, J, K, L) for a first player (1) differs from the assignment of the display avatar data of the respective other players (U, V, W, M, N, O, Q, R, S, J, K, L) for a further player (2),

2. Method according to claim 1, wherein a first player (1) with first registration avatar data (A) has himself displayed on his display device (5.1) as a first display avatar (U) and at the same time a second player (2) with second registration avatar data (B) has another assignment for the first player (1) displayed on his display device (5.2), for example a second display avatar (V) or a third display avatar (W).

3. Method according to one of the preceding claims, wherein the display avatar data (U, V, W, M, N, O, Q, R, S, J, K, L) differ for several, in particular for all, players (1, 2, 3).

4. Method according to one of the preceding claims, wherein the data exchange routine (17) assigns the display avatar data (U, V, W, M, N, O, Q,R,S, J,K,L) for the players, in particular for each game, with the aid of a random generator routine.

5. Method according to one of the preceding claims, wherein the game operator platform (6) is designed for more than two players (1, 2, 3), in particular for three players (1, 2, 3).

6. Method according to one of the preceding claims, wherein a game can consist of several game rounds and the assignment of display avatar data (U, V, W, M, N, O, Q, R, S, J, K, L) changes between two game rounds.

7. Method according to one of the preceding claims, wherein as many display avatar data (U,V,W) as registration avatar data (A,B,C) are provided.

8. Method according to one of the preceding claims, wherein more display avatar data (J,K,L,M,N,O, Q, R,S) are provided than registration avatar data (A,B,C), in particular up to a value of number of registration avatar data (A,B,C) multiplied by number of players (1,2,3).

9. Method according to one of the preceding claims, wherein after a predetermined event, in particular after the end of a game, the registration avatar data (A, B, C) are transmitted to the data processing devices (4.1, 4.2, 4.3) of the players (1, 2, 3) for display on their respective display devices (5.1, 5.2, 5.3).

10. Method for displaying an assignment of at least one anonymised avatar according to a method of the preceding claims.

11. A computer program product comprising instructions which, when executed, are adapted for a game operator platform (6) for an online game, wherein the online game is adapted to be played by a plurality of players (1, 2, 3), wherein the game operator platform (6) is adapted so that each player (1, 2, 3)
a) can connect to the game operator platform (6) via a data processing device (4.1, 4.2, 4.3) with display device (5.1, 5.2, 5.3) assigned to him, by means of data processing, in particular via the Internet, and
b) can see the other players with their respective display avatars (U,V,W, M,N,O, Q,R,S, J,K,L) on his display device (5.1, 5.2, 5.3),
c) with the following procedural steps, executable by the game operator platform (6):
- (101) Determining the registration avatar data (A,B,C) from the players (1,2,3),
- (102) For each of the players (1,2,3): Assignment of display avatar data (U,V,W, M,N,O, Q,R,S, J,K,L) to the registration avatar data (A,B,C),
- (103) Transmission of the respective display avatar data (U,V,W, M,N,O, Q,R,S, J,K,L) to the data processing devices (4.1, 4.2, 4.3) of the players (1,2,3) for display on their respective display devices (5.1, 5.2, 5.3), **characterised by**
d) wherein the assignment of the display avatar data of the respective other players is performed by a predetermined data exchange routine (17) in such a way that the assignment of the display avatar data of the respective other players (U, V, W, M,N,O, Q,R,S, J,K,L) for a first player (1) differs from the assignment of the display avatar data of the respective other players (U,V,W, M,N,O, Q,R,S, J,K,L) for a further player (2).

12. Computer program product according to claim 11, which, when executed, is designed to display to a first player (1) himself as a first display avatar (U) with first registration avatar data (A) on his display device (5.1) and at the same time to display a different assignment for the first player (1), for example a second display avatar (V) or a third display avatar (W), to a second player (2) with second registration avatar data (B) on his display device (5.2).

## Revendications

1. Procédé pour affecter au moins un avatar anonymisé à un joueur (1, 2, 3) pour une plateforme d'exploitant de jeux (6) pour un jeu en ligne, dans lequel le jeu en ligne est conçu pour jouer à plusieurs joueurs (1, 2, 3),
dans lequel la plate-forme d'exploitant de jeu (6) est conçue de telle sorte que chaque joueur (1, 2, 3)
a) peut se connecter informatiquement, en particulier via Internet, à la plate-forme d'exploitant de jeu (6) avec un dispositif d'affichage (5.1, 5.2, 5.3), par l'intermédiaire d'un dispositif de traitement de données (4.1, 4.2, 4.3) qui lui est affecté, et
b) peut voir sur son dispositif d'affichage (5.1, 5.2, 5.3) les autres joueurs respectifs avec leur avatar d'affichage (U, V, W, M, N, O, Q, R, S, J, K, L) respectif,
c) comportant les étapes de procédé suivantes pouvant être mises en oeuvre par la plateforme d'exploitant de jeux (6) :
- (101) déterminer les données d'avatar d'identification (A, B, C) des joueurs (1, 2, 3),
- (102) pour chacun des joueurs (1, 2, 3) : affecter des données d'avatar d'affichage (U, V, W, M, N, O, Q, R, S, J, K, L) aux données d'avatar d'identification (A, B, C),
- (103) transmettre les données d'avatar d'affichage (U, V, W, M, N, O, Q, R, S, J, K, L) respectives aux dispositifs de traitement de données (4.1, 4.2, 4.3) des joueurs (1,2, 3) pour les afficher sur leurs dispositifs d'affichage (5.1, 5.2, 5.3) respectifs, **caractérisé en ce que**
d) l'affectation des données d'avatar d'affichage des autres joueurs (U, V, W, M, N, O, Q, R, S, J, K, L) respectifs est effectuée par une routine d'échange de données (17) prédéterminée de telle sorte que l'affectation des données d'avatar d'affichage des autres joueurs (U, V, W, M, N, O, Q, R, S, J, K, L) respectifs pour un premier joueur (1) est différente de l'affectation des données d'avatar d'affichage des autres joueurs (U, V, W, M, N, O, Q, R, S, J, K, L) respectifs pour un joueur supplémentaire (2).

2. Procédé selon la revendication 1, dans lequel un premier joueur (1) ayant des premières données d'avatar d'identification (A) sur son dispositif d'affichage (5.1) s'affiche lui-même sous la forme d'un premier avatar d'affichage (U) et un second joueur (2) ayant des secondes données d'avatar d'identification (B) sur le dispositif d'affichage (5.2) de ce dernier s'affiche simultanément avec une affectation différente du premier joueur (1), par exemple un deuxième avatar d'affichage (V) ou un troisième avatar d'affichage (W).

3. Procédé selon l'une des revendications précédentes, dans lequel les données d'avatar d'affichage (U, V, W, M, N, O, Q, R, S, J, K, L) sont différentes pour plusieurs joueurs, en particulier pour tous les joueurs (1, 2, 3).

4. Procédé selon l'une des revendications précédentes, dans lequel la routine d'échange de données (17) effectue l'affectation des données d'avatar d'affichage (U, V, W, M, N, O, Q, R, S, J, K, L) pour les joueurs, en particulier pour chaque partie, en utilisant une routine de générateur de nombres aléatoires.

5. Procédé selon l'une des revendications précédentes, dans lequel la plateforme d'exploitant de jeux (6) est conçue pour plus de deux joueurs (1, 2, 3), en particulier pour trois joueurs (1, 2, 3).

6. Procédé selon l'une des revendications précédentes, dans lequel une partie peut être constituée de plusieurs manches et l'affectation de données d'avatar d'affichage (U, V, W, M, N, O, Q, R, S, J, K, L) change entre deux manches.

7. Procédé selon l'une des revendications précédentes, dans lequel sont prévues autant de données d'avatar d'affichage (U, V, W) que de données d'avatar d'identification (A, B, C).

8. Procédé selon l'une des revendications précédentes, dans lequel sont prévues plus de données d'avatar d'affichage (J, K, L, M, N, O, Q, R, S) que de données d'avatar d'identification (A, B, C), en particulier jusqu'à un nombre égal au nombre de données d'avatar d'identification (A, B, C) multiplié par le nombre de joueurs (1, 2, 3).

9. Procédé selon l'une des revendications précédentes, dans lequel après un événement prédéterminé, en particulier après la fin d'une partie, les données d'avatar d'identification (A, B, C) sont transmises aux dispositifs de traitement de données (4.1, 4.2, 4.3) des joueurs (1, 2, 3) pour être affichées sur leurs dispositifs d'affichage (5.1, 5.2, 5.3) respectifs.

10. Procédé pour afficher une affectation d'au moins un avatar anonymisé selon un procédé des revendications précédentes.

11. Produit de programme informatique comprenant des instructions qui, lorsqu'elles sont exécutées, sont conçues pour une plateforme d'exploitant de jeux (6) pour un jeu en ligne, dans lequel le jeu en ligne est conçu pour jouer à plusieurs joueurs (1, 2, 3), dans lequel la plateforme d'exploitant de jeux (6) est conçue pour que chaque joueur (1, 2, 3)
a) puisse se connecter informatiquement, en particulier via Internet, à la plate-forme d'exploitant de jeu (6) avec un dispositif d'affichage (5.1, 5.2, 5.3), par l'intermédiaire d'un dispositif de traitement de données qui lui est affecté (4.1, 4.2, 4.3), et
b) puisse voir sur son dispositif d'affichage (5.1, 5.2, 5.3) les autres joueurs respectifs avec leur avatar d'affichage (U, V, W, M, N, O, Q, R, S, J, K, L) respectif,
c) les étapes de procédé suivantes pouvant être mises en oeuvre par la plateforme d'exploitant de jeux (6) :
- (101) déterminer les données d'avatar d'identification (A, B, C) des joueurs (1, 2, 3),
- (102) pour chacun des joueurs (1, 2, 3) : affecter des données d'avatar d'affichage (U, V, W, M, N, O, Q, R, S, J, K, L) aux données d'avatar d'identification (A, B, C),
- (103) transmettre les données d'avatar d'affichage (U, V, W, M, N, O, Q, R, S, J, K, L) respectives aux dispositifs de traitement de données (4.1, 4.2, 403) des joueurs (1, 2, 3) pour les afficher sur leurs dispositifs d'affichage (5.1, 5.2, 5.3) respectifs, **caractérisé en ce que**
d) l'affectation des données d'avatar d'affichage des autres joueurs (U, V, W, M, N, O, Q, R, S, J, K, L) respectifs est effectuée par une routine d'échange de données (17) prédéterminée de telle sorte que l'affectation des données d'avatar d'affichage des autres joueurs (U, V, W, M, N,O, Q, R, S, J, K, L) respectifs pour un premier joueur (1) est différente de l'affectation des données d'avatar d'affichage des autres joueurs (U, V, W, M, N, O, Q, R, S, J, K, L) respectifs pour un joueur supplémentaire (2).

12. Produit de programme informatique selon la revendication 11 qui, lorsqu'il est exécuté, est conçu pour afficher un premier joueur (1) ayant des premières données d'avatar d'identification (A) sur son dispositif d'affichage (5.1) lui-même sous la forme d'un premier avatar d'affichage (U) et pour afficher simultanément un second joueur (2) ayant des secondes données d'avatar d'identification (B) sur le dispositif d'affichage (5.2) de ce dernier avec une autre affectation du premier joueur (1), par exemple un deuxième avatar d'affichage (V) ou un troisième avatar d'affichage (W).
